(19) Europäisches Patentamt
European Patent Office
Office européen des brevets

(11) **EP 4 265 329 A1**

(12) **EUROPEAN PATENT APPLICATION**
published in accordance with Art. 153(4) EPC

(43) Date of publication:
**25.10.2023 Bulletin 2023/43**

(21) Application number: **21906433.4**

(22) Date of filing: **07.12.2021**

(51) International Patent Classification (IPC):
*B01J 29/74* (2006.01)   *B01D 53/94* (2006.01)
*B01J 27/16* (2006.01)   *B01J 35/10* (2006.01)
*F01N 3/10* (2006.01)

(52) Cooperative Patent Classification (CPC):
**B01D 53/94; B01J 27/16; B01J 29/74; B01J 35/10; F01N 3/10**

(86) International application number:
**PCT/JP2021/044868**

(87) International publication number:
**WO 2022/131070 (23.06.2022 Gazette 2022/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.12.2020  JP 2020208473**

(71) Applicant: **Umicore Shokubai Japan Co., Ltd.
Tokoname-shi
Aichi 479-0882 (JP)**

(72) Inventors:
• **KUMON, Tatsuya
Kobe-shi, Hyogo 650-0047 (JP)**
• **GOTO, Yosuke
Kobe-shi, Hyogo 650-0047 (JP)**
• **MAEJIMA, Yusaku
Kobe-shi, Hyogo 650-0047 (JP)**

(74) Representative: **Banse & Steglich
Patentanwälte PartmbB
Patentanwaltskanzlei
Herzog-Heinrich-Straße 23
80336 München (DE)**

(54) **AL-P COMPOSITE OXIDE AND EXHAUST GAS PURIFYING CATALYST USING SAME**

(57)   [Problem]
A means for improving CO and HC oxidation performance at a low temperature range even after high temperature thermal aging in an exhaust gas purification catalyst is provided.
[Solution]
An Al-P composite oxide containing aluminum oxide and phosphorus oxide, wherein with respect to the total mass of the Al-P composite oxide, the aluminum oxide content is 79 mass% or more and 97 mass% or less in terms of $Al_2O_3$, the zirconium oxide content is 0 mass% or more than 0 mass% and 7 mass% or less in terms of $ZrO_2$, and the phosphorus oxide content is 3 mass% or more and 14 mass% or less in terms of $PO_4$.

**Description**

Technical Field

The present invention relates to an Al-P composite oxide and an exhaust gas purification catalyst using the same.

Background Art

With the tightening of regulations on automobile exhaust gas, there is an increasing demand for maintaining exhaust gas purification performance over a long period of time. This means that there is a demand for extending the life of a catalyst as an after-treatment device for exhaust gas purification, that is, improving the long-term durability of a catalyst.

It is known that one of the causes of deterioration of exhaust gas purification performance is that long-term exposure to high temperature exhaust gas reduces the surface area of refractory inorganic oxide (such as alumina) particles used as carrier for precious metal or the like. Therefore, a means for suppressing the decrease in surface area of refractory inorganic oxide after high temperature thermal aging has been studied.

For example, JP2004-167354A discloses a catalyst carrier in which phosphorus is added to a composite oxide containing $Al_2O_3$ and an acidic oxide formed of at least one of $ZrO_2$ and $TiO_2$. According to JP2004-167354A, in the catalyst carrier, by incorporating P, the precious metal is brought into a highly oxidized state, and the surface area of the carrier after high temperature thermal aging is large, so that the grain growth of the precious metal is suppressed, and therefore, even after high temperature thermal aging, high NO oxidation activity can be exhibited from a low temperature range.

Summary of Invention

Technical Problem

However, according to the studies by the present inventors, it was found that even with the technique described in JP2004-167354A, sufficient exhaust gas purification performance may sometimes not be exhibited. In particular, since the carbon monoxide (CO) and hydrocarbon (HC) oxidation performance at a low temperature range after high temperature thermal aging is not sufficient, improvement has been required.

Therefore, an object of the invention is to provide a means for improving CO and HC oxidation performance at a low temperature range even after high temperature thermal aging in an exhaust gas purification catalyst.

Solution to Problem

The present inventors conducted intensive studies to solve the above problem. As a result, it was found that in Al-P composite oxides containing aluminum oxide and phosphorus oxide, the above problems can be solved by setting the zirconium oxide content to or below a predetermined value, in addition to setting the contents of aluminum oxide and phosphorus oxide within predetermined ranges, and thus the invention was completed.

That is, one embodiment of the invention is an Al-P composite oxide containing aluminum oxide and phosphorus oxide, wherein with respect to the total mass of the Al-P composite oxide, the aluminum oxide content is 79 mass% or more and 97 mass% or less in terms of $Al_2O_3$, the zirconium oxide content is 0 mass% or more than 0 mass% and 7 mass% or less in terms of $ZrO_2$, and the phosphorus oxide content is 3 mass% or more and 14 mass% or less in terms of $PO_4$.

Description of Embodiments

The numerical range "A to B" in the present specification means "A or more and B or less". Further, "A and/or B" means "either A or B" or "both A and B". Further, various physical properties in the present specification mean values measured by the method described in the below-mentioned Examples unless otherwise specified.

<Al-P Composite Oxide>

The Al-P composite oxide (hereinafter also simply referred to as "composite oxide") according to one embodiment of the invention contains aluminum oxide and phosphorus oxide, and is characterized in that with respect to the total mass of the Al-P composite oxide, the aluminum oxide content is 79 mass% or more and 97 mass% or less in terms of $Al_2O_3$, the zirconium oxide content is 0 mass% or more than 0 mass% and 7 mass% or less in terms of $ZrO_2$, and

the phosphorus oxide content is 3 mass% or more and 14 mass% or less in terms of $PO_4$. The Al-P composite oxide according to the invention can improve HC and CO oxidation performance at a low temperature range even after high temperature thermal aging in the exhaust gas purification catalyst by having the above-mentioned configuration.

The Al-P composite oxide according to the invention essentially contains aluminum oxide (alumina). The aluminum oxide content is 79 mass% or more and 97 mass% or less, preferably 85 mass% or more and 95 mass% or less, more preferably 85 mass% or more and 90 mass% or less, and even more preferably 85 mass% or more and less than 90 mass% in terms of $Al_2O_3$ with respect to the total mass of the Al-P composite oxide. When the aluminum oxide content is less than 79 mass%, the high temperature durability deteriorates, which is not preferable. When the aluminum oxide content is more than 97 mass%, the effect of phosphorus oxide deteriorates, which is not preferable.

The Al-P composite oxide according to the invention essentially contains phosphorus oxide. The phosphorus oxide content is 3 mass% or more and 14 mass% or less, and preferably 5 mass% or more and 10 mass% or less in terms of $PO_4$ with respect to the total mass of the Al-P composite oxide. When the phosphorus oxide content is less than 3 mass%, there are insufficient acid sites on the Al-P composite oxide, and the characteristic of adhering water ($H_2O$) or HC with low reactivity (high boiling point HC, aromatic HC, or the like) onto the acid site deteriorates, and as a result, adhesion of water ($H_2O$) or HC with low reactivity (high boiling point HC, aromatic HC, or the like) to precious metal adsorbed onto the Al is promoted, which is not preferable. When the phosphorus oxide content is more than 14 mass%, the amount of exposed Al decreases with the increase in the surface P concentration, so that the dispersibility of the precious metal significantly decreases, which is not preferable. As described in the below-mentioned Examples, when the phosphorus oxide content is 7.5 mass% or more and 10 mass% or less in terms of $PO_4$ with respect to the total mass of the Al-P composite oxide, a particularly high HC and CO oxidation rates are achieved. On the other hand, the value of "CO and HC oxidation performance per mass unit of $PO_4$" calculated in the below-mentioned Examples becomes particularly high when the phosphorus oxide content is within the range of 5 mass% or more and 7.5 mass% or less in terms of $PO_4$ with respect to the total mass of the Al-P composite oxide. The value of "CO and HC oxidation performance per mass unit of $PO_4$" is an index showing the degree of improvement of exhaust gas purification performance per $PO_4$, and therefore, when considering the balance between the effect of improving the exhaust gas purification performance and the cost of the phosphorus oxide raw material (phosphorus source), it can be said that the range of 5 mass% or more and 7.5 mass% or less is particularly preferable.

The Al-P composite oxide according to the invention preferably contains zirconium oxide. The incorporation of zirconium oxide is preferable because a high specific surface area can be maintained thereby. The zirconium oxide content when the Al-P composite oxide contains zirconium oxide is 7 mass% or less, and preferably 5 mass% or less in terms of $ZrO_2$ with respect to the total mass of the Al-P composite oxide. When the zirconium oxide content is 7 mass% or less, the phase transition of aluminum oxide under high temperature thermal aging is suppressed and a high specific surface area can be maintained. That is, the numerical range of the zirconium oxide content in the Al-P composite oxide of the invention is 0 mass% or more than 0 mass% and 7 mass% or less, preferably 0 mass% or more than 0 mass% and 6 mass% or less, more preferably more than 0 mass% and 5 mass% or less, and even more preferably 2.5 mass% or more and 5 mass% or less in terms of $ZrO_2$ with respect to the total mass of the Al-P composite oxide.

In the Al-P composite oxide according to a preferred embodiment of the invention, with respect to the total mass of the Al-P composite oxide, the aluminum oxide content is 85 mass% or more and 95 mass% or less in terms of $Al_2O_3$, the zirconium oxide content is 0 mass% or more than 0 mass% and 5 mass% or less in terms of $ZrO_2$, and the phosphorus oxide content is 5 mass% or more and 10 mass% or less in terms of $PO_4$.

The Al-P composite oxide according to the invention can contain another metal oxide. Examples of such other metal oxides include silicon dioxide (silica; $SiO_2$) and titanium dioxide (titania; $TiO_2$). However, from the viewpoint of further improving the effect of the invention, the content of other metal oxides is preferably 0 mass% or more than 0 mass% and 10 mass% or less, more preferably 0 mass% or more than 0 mass% and 5 mass% or less, and even more preferably 0 mass% (no other metal oxide is contained) with respect to the total mass of the Al-P composite oxide. That is, the Al-P composite oxide according to a preferred embodiment of the invention contains only aluminum oxide and phosphorus oxide, or contains only aluminum oxide, phosphorus oxide, and zirconium oxide.

The contents of aluminum oxide, phosphorus oxide, zirconium oxide, and other metal oxides contained in the AlP composite oxide can be controlled by adjusting the raw material amounts (metal sources) when producing the Al-P composite oxide. The contents of these materials contained in the Al-P composite oxide can be measured by inductively coupled plasma optical emission spectrometry (ICP-OES).

The specific surface area of the Al-P composite oxide can be measured by the multipoint BET method according to ISO 9277: 2010. The BET specific surface area of the Al-P composite oxide (BET surface area per gram of Al-P composite oxide) is preferably 170 $m^2$/g or more and 300 $m^2$/g or less, more preferably 170 $m^2$/g or more and 280 $m^2$/g or less, even more preferably 170 $m^2$/g or more and 260 $m^2$/g or less, and particularly preferably 190 $m^2$/g or more and 250 $m^2$/g or less. When the BET specific surface area of the Al-P composite oxide is 170 $m^2$/g or more, the precious metal supported on the Al-P composite oxide is highly dispersed, which is preferable. On the other hand, when the BET specific surface area of the Al-P composite oxide is 300 $m^2$ or less, the BET specific surface area hardly decreases when the Al-P composite oxide is exposed to high temperature exhaust gas, which is preferable.

The amount of acid sites on the Al-P composite oxide can be measured by an ammonia ($NH_3$) TPD method. The amount of desorbed $NH_3$ obtained by the $NH_3$ TPD method correlates with the amount of the acid sites present on the surface of the Al-P composite oxide. The larger the amount of desorbed $NH_3$, the larger the amount of acid sites present on the surface of the Al-P composite oxide. If the amount of acid sites present on the surface of the Al-P composite oxide is changes, the properties of the Al-P composite oxide are also change, and the state of the precious metal supported thereon is also changed. The amount of desorbed $NH_3$ per gram of the Al-P composite oxide is preferably 43 $\mu$mol or more and 150 $\mu$mol or less, more preferably 45 $\mu$mol or more and 100 $\mu$mol or less, even more preferably 48 $\mu$mol or more and 80 $\mu$mol or less, and particularly preferably more than 50 $\mu$mol and 80 $\mu$mol or less. When the amount of desorbed $NH_3$ per gram of the Al-P composite oxide is 43 $\mu$mol or more, the precious metal is supported near the acid site, and the precious metal easily maintains a zero-valent state with high catalytic activity. When the precious metal maintains a zero-valent state, $H_2O$ adsorbed on the precious metal moves and is adsorbed onto the acid site on a P atom present on the surface of the Al-P composite oxide, so that the oxidation reaction of CO and HC on the precious metal can be promoted, which is preferable. On the other hand, when the amount of desorbed $NH_3$ per gram of the Al-P composite oxide is 150 $\mu$mol or less, distance between adjacent acid sites is maintained, so that an aggregation of the precious metal on the surface of the Al-P composite oxide is suppressed. Thereby, the precious metal is supported on the surface of the Al-P composite oxide in a highly dispersed state, which is preferable. That is, when the amount of desorbed $NH_3$ is within this range, Al and P on the surface of the Al-P composite oxide are arranged at appropriate intervals. As a result, an improvement of the CO and HC oxidation activity performance can be achieved.

The method for producing an Al-P composite oxide according to the invention is not particularly limited, and a method for producing a composite oxide that can be used in this technical field can be appropriately adopted. Examples of the method for producing a composite oxide include a precipitation method, a hydrolysis method, a sol-gel method, and a hydrothermal synthesis method. Among these, it is preferable to use a precipitation method in order to form a more uniform Al-P composite oxide.

The raw materials used for producing the Al-P composite oxide are not particularly limited, and raw materials that can be used in this technical field can be appropriately adopted. Examples of raw materials of the alumina (aluminum source) include, in addition to alumina such as $\gamma$-alumina, $\delta$-alumina, and $\theta$-alumina, aluminum chloride, aluminum nitrate (for example, aluminum nitrate 9-hydrate), aluminum sulfate, aluminum acetate, and aluminum hydroxide, each of which is converted into alumina by calcining. Among these, aluminum nitrate (for example, aluminum nitrate 9-hydrate) is preferable. Examples of zirconia raw materials (zirconium source) include, in addition to oxides such as zirconia and zirconia sol, zirconium oxynitrate, zirconium oxychloride, zirconium nitrate, basic zirconium sulfate, zirconium carbonate, and zirconium hydroxide, each of which is converted into zirconia by calcining. Among these, zirconium nitrate is preferable. Examples of phosphorus oxide raw materials (phosphorus source) include phosphoric acid, phosphorous acid, ammonium dihydrogen phosphate, and diammonium hydrogen phosphate. Among these, phosphoric acid is preferable.

For example, as the method for producing an Al-P composite oxide by precipitation method, necessary raw materials are dissolved in water, thereby preparing an acidic mixed aqueous solution, and then, the mixed aqueous solution is added dropwise into an alkaline aqueous solution such as aqueous ammonia, thereby forming a precipitate. In order to arrange an appropriate amount of phosphorus atoms on the surface of the alumina after drying and calcining, an appropriate amount of a solvent (for example, water) is used when forming the precipitate. When the amount of solvent (for example, water) is small, the phosphorus concentration on the alumina surface becomes larger, and when it is too large, the surface phosphorus concentration tends to decrease, and the amount of the solvent discharged increases, which is not suitable also from the viewpoint of production. The solvent is preferably 1 to 10 mass%, and more preferably 2 to 8 mass% with respect to the amount of the Al-P composite oxide after calcining (in terms of oxide) described below. Then, the obtained precipitate is dried and thereafter calcined. The drying temperature is preferably 50 to 250°C, and more preferably 100 to 200°C, and the drying time is preferably 1 minute to 36 hours, and more preferably 5 minutes to 12 hours. The calcining is usually performed in air, the calcining temperature is preferably 300 to 1000°C, and more preferably 350 to 850°C, and the calcining time is preferably 5 minutes to 10 hours, and more preferably 10 minutes to 5 hours.

<Exhaust Gas Purification Catalyst>

As described above, the Al-P composite oxide according to the invention has a large specific surface area and a large amount of solid acid (acid sites), so that the precious metal which catalyzes the oxidation reaction of CO and HC can be highly dispersed. In addition, due to having a characteristic of adsorbing water ($H_2O$) or HC with low reactivity (high boiling point HC, aromatic HC, or the like) on the acid sites of the Al-P composite oxide, the adhesion of water ($H_2O$) or HC with low reactivity (high boiling point HC, aromatic HC, or the like) onto the precious metal can be suppressed. These are maintained in such a state even after high temperature thermal aging. Therefore, the Al-P composite oxide according to the invention is suitably used in an exhaust gas purification catalyst. That is, according to another embodiment of the invention, an exhaust gas purification catalyst containing the above-mentioned Al-P composite oxide and a precious metal, each of which are supported on a refractory three-dimensional structure, is provided. Preferably, at least part of the precious metal is supported on the Al-P composite oxide.

[Al-P Composite Oxide]

The Al-P composite oxide functions as a carrier for the precious metal in the exhaust gas purification catalyst.
In the exhaust gas purification catalyst according to the invention, the amount (supported amount) of the Al-P composite oxide per liter of the refractory three-dimensional structure is preferably 10 to 300 g, more preferably 30 to 150 g, and even more preferably 50 to 80 g. When the amount of the Al-P composite oxide is 10 g or more, the effect of the invention is exhibited more, which is preferable. When the amount of the Al-P composite oxide is 300 g or less, the catalyst layer does not become too thick and exhaust gas can be circulate better, which is preferable.

[Precious Metal]

In the exhaust gas purification catalyst, the precious metal functions as a catalyst for the oxidation reaction of carbon monoxide (CO) and hydrocarbons (HC) contained in exhaust gas and the reduction reaction of nitrogen oxides (NOx) contained in exhaust gas.
The precious metal is preferably at least one type selected from platinum (Pt), palladium (Pd), and rhodium (Rh), more preferably contains Pt, even more preferably contains Pt and Pd, and is particularly preferably Pt and Pd.
When the precious metal contains platinum and palladium (preferably when the precious metal is platinum and palladium), the mass ratio of platinum and palladium is preferably Pt : Pd = 1 : 0.02 to 1, more preferably Pt : Pd = 1 : 0.04 to 1, even more preferably Pt : Pd = 1 : 0.1 to 1, particularly preferably Pt : Pd = 1 : 0.2 to 1, and most preferably Pt : Pd = 1 : 0.3 to 0.7 in terms of metal. When the mass ratio of platinum and palladium is in the above range, sufficient CO and HC oxidation performance can be exhibited even after thermal aging, which is preferable. In this form (when the precious metal contains platinum and palladium (preferably when the precious metal is platinum and palladium)), the crystallite diameter of the precious metal is preferably 1 nm or more and 13 nm or less, more preferably 2.0 nm or more and less than 13.0 nm. As described in the below-mentioned Examples, the crystallite diameter is determined using the Scherrer equation from the half width of the peak at $2\theta = 39.86°$ by performing XRD measurement using a CuKα ray after subjecting the catalyst to a thermal aging.
The peak at $2\theta = 39.86°$ is attributed to the Pt(111) plane. The precious metal may include Pt separately, Pd separately, and a Pt-Pd alloy, and the peaks thereof can be observed overlapping each other in the vicinity of $2\theta = 40°$. In the present specification, the crystallite diameter determined from the half width of the peak at $2\theta = 39.86°$ is referred to as the "crystallite diameter of the precious metal" regardless of the position of the peak top actually observed.
When the precious metal contains platinum and palladium (preferably when the precious metal is platinum and palladium), the amount (total supported amount) of platinum and palladium per liter of the catalyst is preferably 0.1 to 15 g, more preferably 1 to 10 g, and even more preferably 0.5 to 5 g. When the amount of platinum and palladium is 0.1 g or more, they are less susceptible to electrostatic interaction with the Al-P composite oxide and sufficient CO and HC oxidation performance can be exhibited, which is preferable. When the amount of platinum and palladium is 15 g or less, the dispersibility of the precious metal can be kept high, which is preferable.
The raw material of the precious metal is not particularly limited, and a raw material that can be used in this technical field can be appropriately adopted. For example, a nitrate, an acetate, an ammonium salt, an amine salt, a carbonate, or the like of each precious metal can be preferably used.

[Zeolite]

The exhaust gas purification catalyst according to the invention preferably contains a zeolite (hydrous aluminosilicate). Since zeolites have a function of adsorbing HC, the HC oxidation performance can be further improved in the exhaust gas purification catalyst.
The type of zeolite is not particularly limited and may be either a natural product or a synthetic product. Specific examples thereof include A type, X type, Y type, L type, beta type (BEA type), ZSM type, CHA type, ferrierite type, linde type, faujasite type, MCM-22 type, and mordenite type. Among these, beta type (BEA type) is preferable.
The BET specific surface area of the zeolite is preferably 320 to 830 m$^2$/g, and more preferably 500 to 650 m$^2$/g. When the BET specific surface area is within the above range, HC in the exhaust gas can be sufficiently adsorbed.
The zeolite shape is not particularly limited, and may be any shape such as a particle shape, a fine particle shape, a powder shape, a cylindrical shape, a conical shape, a prismatic shape, a cubic shape, a pyramidal shape, or an amorphous shape, but is preferably a particle shape, a fine particle shape, or a powder shape, and more preferably a powder shape.

The amount (supported amount) of zeolite per liter of the refractory three-dimensional structure is preferably 0 g or more than 0 g and 300 g or less, and more preferably 10 to 60 g. When the amount of zeolite is more than 0 g, the effect of adsorbing HC is exhibited, which is preferable. When the amount of zeolite is 300 g or less, the catalyst layer does not become too thick and the exhaust gas can be circulate better, which is preferable.

When the exhaust gas purification catalyst according to the invention contains zeolite, the mass ratio of the Al-P composite oxide to zeolite is preferably Al-P composite oxide : zeolite = 1 : 0.05 to 15, more preferably Al-P composite oxide : zeolite = 1 : 0.1 to 1, and even more preferably Al-P composite oxide : zeolite = 1 : 0.5 to 0.8. When the mass ratio of the Al-P composite oxide to zeolite is within the above range, the precious metal can be highly dispersed and HC in the exhaust gas can be sufficiently adsorbed.

[Co-Catalyst]

The exhaust gas purification catalyst according to the invention preferably contains at least one type of co-catalyst selected from the group consisting of group I elements, group II elements, and rare earth elements. Examples of specific elements include potassium, magnesium, calcium, strontium, barium, and lanthanum. As a raw material, an oxide, a sulfate, a carbonate, a nitrate, or the like of a group I element, a group II element, or a rare earth element is used, and is contained in the form of an oxide, a nitrate, or a carbonate after calcining the catalyst. Among these, lanthanum oxide ($La_2O_3$), barium oxide (BaO), and barium sulfate ($BaSO_4$) are preferable, and lanthanum oxide ($La_2O_3$) is more preferable. The amount of the co-catalyst (preferably lanthanum oxide ($La_2O_3$)) per liter of the refractory three-dimensional structure is preferably 1 to 20 g, more preferably 1 to 10 g, and even more preferably 1 to 5 g.

[Other Component]

The exhaust gas purification catalyst according to the invention may contain another component. This other component is not particularly limited, and a component which can be used in this technical field can be appropriately adopted. Specific examples thereof include refractory inorganic oxides (such as alumina, lanthanum-containing alumina, zirconia, silica-alumina, and titania) excluding the Al-P composite oxide of the invention. However, from the viewpoint of further exhibiting the effect of the invention, it is preferable that the amount of this other component is small. Specifically, the amount (supported amount) of this other component per liter of the refractory three-dimensional structure is preferably 0 to 50 g, and more preferably 0 to 10 g.

[Refractory Three-Dimensional Structure]

The refractory three-dimensional structure is not particularly limited, and any that can be used in this technical field can be appropriately adopted, but a honeycomb carrier is preferable. Examples of honeycomb carriers include a monolith honeycomb carrier, a metal honeycomb carrier, and a plug honeycomb carrier such as a particulate filter. Examples of honeycomb carrier materials include cordierite, silicon carbide, silicon nitride, stainless steel, and a heat-resistant metal such as an Fe-Cr-Al alloy.

The honeycomb carrier is produced by an extrusion molding method, a method of winding and hardening a sheet-like element, or the like. The shape of a gas passage hole (cell shape) may be any of a hexagonal shape, a quadrangular shape, a triangular shape, and a corrugated shape. A carrier can be adequately used as long as the cell density (number of cells/unit sectional area) is 100 to 1200 cells/square inch (15.5 to 186 cells/square centimeter), and preferably 200 to 900 cells/square inch (31 to 139.5 cells/square centimeter).

The total length of the refractory three-dimensional structure is preferably 10 to 1000 mm, more preferably 15 to 300 mm, and even more preferably 20 to 150 mm.

The method for producing an exhaust gas purification catalyst according to the invention is not particularly limited, and a known method can be appropriately adopted. A preferred embodiment includes a method for producing an exhaust gas purification catalyst including (a) a slurry preparation step, (b) a slurry application step, and (c) a drying and calcining step. Hereinafter, each of the steps (a) to (c) will be described in detail.

(a) Slurry Preparation Step

The slurry preparation step is a step of preparing a slurry containing raw materials which will become the above-mentioned respective components (Al-P composite oxide, precious metal, and optionally contained zeolite, co-catalyst, and another component) after the below-mentioned drying and calcining step. The slurry is prepared by mixing the raw materials of the respective components in an aqueous medium, followed by wet grinding.

As the aqueous medium, water, a lower alcohol such as ethanol or 2-propanol, an organic alkaline aqueous solution, or the like can be used. Among these, it is preferable to use water and/or a lower alcohol, and it is more preferable to use water.

The wet grinding can be performed by a known method using, for example, a ball mill or the like.

In the slurry preparation step, the respective components are added to an aqueous medium, followed by stirring for 5 minutes to 24 hours, and then, wet grinding is performed. When the pH of the slurry immediately before performing the wet grinding is 10 or higher, the pH is returned to a value lower than 10, preferably lower than 8 with an acid such as nitric acid, and then, wet grinding can be performed. When the pH of the slurry immediately before performing the wet grinding is lower than 2, the pH is returned to 2 or higher, preferably 4 or higher with a base such as aqueous ammonia, and then, wet grinding can be performed.

When the exhaust gas purification catalyst has two or more catalyst layers, a slurry is prepared for each catalyst layer. For example, when the catalyst has two catalyst layers (when the catalyst has a lower catalyst layer and an upper catalyst layer), in the slurry preparation step, a first slurry for forming the lower catalyst layer and a second slurry for forming the upper catalyst layer are prepared. The first slurry and the second slurry can have different compositions.

(b) Slurry Application Step

The slurry application step is a step of applying the slurry obtained in the slurry preparation step onto the refractory three-dimensional structure. As a method of applying the slurry onto the refractory three-dimensional structure, a known method can be appropriately adopted. Further, the application amount of the slurry can be appropriately set by those skilled in the art according to the amount of a solid matter in the slurry and the thickness of the catalyst layer to be formed.

(c) Drying and Calcining Step

The drying and calcining step is a step of drying and calcining the slurry on the refractory three-dimensional structure applied in the slurry application step. In the drying and calcining step, the drying step and the calcining step may be performed separately, but may be performed in a single heat treatment without distinguishing between the drying step and the calcining step as long as the respective components can be supported on the refractory three-dimensional structure.

In the drying step, the slurry is dried in air at a temperature of preferably 50 to 300°C, and more preferably 80 to 200°C for preferably 5 minutes to 10 hours, and more preferably 30 minutes to 8 hours.

In the calcining step, the slurry dried in the drying step is calciend in air at a temperature of preferably 300 to 1200°C, and more preferably 400 to 700°C for preferably 10 minutes to 10 hours, and more preferably 30 minutes to 5 hours.

When two catalyst layers are formed on the refractory three-dimensional structure, the first slurry is applied onto the refractory three-dimensional structure, and the drying and calcining step is performed to form the lower catalyst layer, and thereafter, the second slurry is applied onto the lower catalyst layer, and the drying and calcining step is performed to form the upper catalyst layer. This makes it possible to produce an exhaust gas purification catalyst with two layers: the lower catalyst layer and the upper catalyst layer are laminated on the refractory three-dimensional structure. Further, when increasing the thickness of the catalyst layer, each of the above-mentioned steps (a) to (c) may be repeated using the same slurry.

<Method for Purifying Exhaust Gas>

According to another embodiment of the invention, the method for purifying exhaust gas including bringing the above-mentioned exhaust gas purification catalyst into contact with exhaust gas discharged from an internal combustion engine is provided. Examples of internal combustion engines include a diesel engine, a diesel hybrid engine, and an engine using natural gas or the like as fuel. Among these, it is preferably a diesel engine.

The space velocity (SV) of the exhaust gas may be a normal velocity, but is preferably 1,000 to 500,000 $hr^{-1}$, and more preferably 5,000 to 200,000 $hr^{-1}$. Further, the gas linear velocity may also be a normal velocity, but the contact is performed at preferably 0.1 to 8.5 m/sec, and more preferably 0.2 to 6.7 m/sec.

According to the invention, CO and HC oxidation performance at a low temperature range can be improved even after high temperature thermal aging. Here, high temperature thermal aging is preferably performed by exposing the catalyst to an atmosphere of 650 to 1200°C for 5 to 500 hours, and more preferably to an atmosphere of 650 to 800°C for 10 to 100 hours. That is, according to a preferred embodiment of the invention, a method for purifying exhaust gas including bringing the above-mentioned exhaust gas purification catalyst into contact with exhaust gas discharged from an internal combustion engine after exposing the catalyst to an atmosphere of 650 to 1200°C for 5 to 500 hours is provided.

In order to measure the oxidation rates of CO and HC in the exhaust gas from a diesel engine, it is preferable to use an evaluation mode for exhaust gas regulations such as NEDC (New European Driving Cycle) mode, JC08 mode, WLTC, FTP75, FTP1199, NRTC, or NRSC mode. For example, when evaluation is performed in the NEDC mode, United Nations Economic Commission for Europe, Addendum 82: Regulation No. 83 is followed.

Further, according to the invention, excellent purification performance (particularly, CO and HC oxidation performance) can be exhibited for low temperature exhaust gas even after high temperature thermal aging. Here, the low temperature is preferably in the range of 50 to 600°C, and more preferably 50 to 400°C. That is, according to a preferred embodiment of the invention, the method for purifying exhaust gas including bringing the above-mentioned exhaust gas purification catalyst into contact with exhaust gas at 50 to 600°C discharged from an internal combustion engine after exposing the catalyst to an atmosphere of 650 to 1200°C for 5 to 500 hours is provided.

In the present specification, the "temperature of exhaust gas" means the temperature of exhaust gas at a catalyst inlet. Here, the "catalyst inlet" refers to a position 10 cm toward the internal combustion engine side from the end face of the catalyst on the exhaust gas inlet side in an exhaust pipe in which the exhaust gas purification catalyst is installed, and refers to a position in the central part of the exhaust pipe in the longitudinal direction (axial direction).

Examples

Hereinafter, the invention will be more specifically described using Examples and Comparative Examples, but the invention is not limited to the following Examples. Unless otherwise specified, each operation was performed under the conditions of room temperature (25°C)/relative humidity of 40 to 50% RH. In addition, unless otherwise specified, ratios represent mass ratios.

<Production of Al-P Composite Oxide>

[Example 1]

Aluminum nitrate 9-hydrate as an alumina raw material, zirconium nitrate as a zirconia raw material, and phosphoric acid as a phosphorus oxide raw material were each weighed so that the mass ratio of $Al_2O_3:ZrO_2:PO_4$ was 90:5:5. Distilled water was weighed to 3 mass% with respect to the amount of the Al-P composite oxide after calcining (in terms of oxide) . The weighed alumina raw material was dispersed in the distilled water, and zirconium nitrate and phosphoric acid were further added thereto and stirred well, thereby preparing a mixed aqueous solution. This mixed aqueous solution was added dropwise to an aqueous solution at a temperature of 25°C adjusted to pH 10 with aqueous ammonia. During the dropwise addition, the pH of the solution was adjusted to fall within the range of 7 to 10 with aqueous ammonia. After completion of the dropwise addition, the generated precipitate was collected by filtration and washed well with deionized water. Subsequently, this was dried at 150°C for 8 hours and then calciend in air at 850°C for 1 hour, thereby obtaining an Al-P composite oxide powder a.

[Examples 2 to 5, Comparative Examples 1 to 6]

Powders b to k were obtained in the same manner as in Example 1 except that the alumina raw material, the zirconia raw material, and the phosphorus oxide raw material were weighed so that the ratio of $Al_2O_3:ZrO_2:PO_4$ was as listed in the following Table 1.

[Comparative Example 7]

An Al-Zr-Si-Ti composite oxide powder 1 was obtained in the same manner as in Example 1 except that aluminum nitrate 9-hydrate as alumina raw material, zirconium nitrate as zirconia raw material, sodium metasilicate as silica raw material, and titanium sulfate as titania raw material were each weighed so that the ratio of $Al_2O_3:ZrO_2:SiO_2:TiO_2$ was 90:5:2.5:2.5.

<Evaluation>

[BET Specific Surface Area]

The BET specific surface area of the Al-P composite oxide was measured according to ISO 9277:2010. Specifically, by using an automatic specific surface area/pore distribution measuring apparatus (TriStar II 3020, manufactured by Micromeritics Instrument Corporation), 0.05 g of the Al-P composite oxide was filled into a sample cell, and the BET specific surface area of the Al-P composite oxide was measured by the multipoint BET method. The results are shown in the following Table 1.

[Solid Acid Amount (Amount of Desorbed NH$_3$)]

The solid acid amount of the Al-P composite oxide was measured using an ammonia temperature programmed desorption method (ammonia TPD method). Specifically, 50 mg of the AlP composite oxide sufficiently ground in an agate mortar was used as a sample and subjected to a pretreatment by being placed for 30 minutes under a helium flow at 600°C. This sample was cooled, and a mixed gas of ammonia and helium (ammonia concentration: 5.0 vol%) was circulated at 50°C for 30 minutes, and the sample was saturated with ammonia to adsorb ammonia thereon. Thereafter, helium was circulated at 50°C for 30 minutes to purge any materials other than ammonia adsorbed onto the sample. Then, the temperature was raised from 50°C to 600°C at a heating rate of 10°C/min under a helium flow, and the amount of ammonia desorbed in the heating process was measured using a quadrupole mass spectrometer (BELMass, manufactured by Microtrac, Inc.). At this time, the amount of ammonia was calculated from the relationship (calibration curve) between the ionic strength of a mass spectrometer for ammonia and the amount of ammonia, which was previously obtained using a helium mixed gas containing ammonia at a known concentration. The results are shown in the following Table 1. The larger the amount of desorbed ammonia, the larger the solid acid amount.

<Production of Exhaust Gas Purification Catalyst>

[Catalysts A to L]

Exhaust gas purification catalysts A to L were produced using the Al-P composite oxide powders a to 1, respectively. Platinum nitrate as Pt raw material, palladium nitrate as Pd raw material, each Al-P composite oxide powder, powdered beta zeolite as zeolite raw material (silica/alumina (molar ratio): 35 to 40, BET specific surface area: 550 to 600 m$^2$/g, average secondary particle diameter: 2 to 6 pm), and lanthanum oxide as lanthanum oxide raw material were each weighed so that the mass ratio of Pt : Pd : Al-P composite oxide : zeolite : La$_2$O$_3$ was 1.33:0.67:60:40:2. Each weighed raw material was added to deionized water, followed by stirring for 30 minutes, and then, the pH was adjusted to 5 by adding nitric acid, thereby obtaining a dispersion liquid. Subsequently, this dispersion liquid was wet ground for 30 minutes at a rotation speed of 200 rpm with a ball mill, thereby preparing a slurry. Subsequently, this slurry was washcoated onto a 0.9-L cordierite carrier (number of cells: 400 cells per square inch of cross-sectional area (1 inch = 2.54 cm)) in a cylindrical shape having a diameter of 129 mm and a length of 70 mm so that the supported amount after calcining was 104.0 g per liter of the carrier. Subsequently, the resultant was dried at 150°C for 20 minutes, and then calciend in air at 500°C for 1 hour, thereby obtaining the respective catalysts.

[Catalyst B1]

A catalyst B1 was obtained in the same manner as the catalyst B except that the Pt raw material, the Pd raw material, the powder b, the zeolite raw material, and the lanthanum oxide raw material were each weighed so that the mass ratio of Pt : Pd : powder b : zeolite : La$_2$O$_3$ was 1.20:0.80:60:40:2.

[Catalyst B2]

A catalyst B2 was obtained in the same manner as the catalyst B except that the Pt raw material, the Pd raw material, the powder b, the zeolite raw material, and the lanthanum oxide raw material were each weighed so that the mass ratio of Pt : Pd : powder b : zeolite : La$_2$O$_3$ was 1.50:0.50:60:40:2.

[Catalyst B3]

A catalyst B3 was obtained in the same manner as the catalyst B except that the Pt raw material, the Pd raw material, the powder b, the zeolite raw material, and the lanthanum oxide raw material were each weighed so that the mass ratio of Pt : Pd : powder b : zeolite : La$_2$O$_3$ was 1.71:0.29:60:40:2.

<Evaluation>

[Thermal Aging Durability]

The exhaust gas purification catalyst was subjected to a thermal aging treatment in air at 700°C for 50 hours using an electric furnace.

[Crystallite Diameter of the Precious Metal]

The crystallite diameter of the precious metal contained in the exhaust gas purification catalyst after the thermal aging treatment was measured using an X-ray diffraction (XRD) method. The measurement was performed according to JIS H 7805:2005 using an X-ray diffractometer (Expert Pro, manufactured by Spectris Co., Ltd.). The measurement conditions were set as follows: measurement angle range ($2\theta$): 30° to 50°, step interval: 0.02°, measurement time: 200 sec/step, radiation source: CuK$\alpha$ ray, tube voltage: 45 kV, and current: 40 mA. As a result of the measurement, the crystallite diameter of the precious metal was determined using the Scherrer equation from the half width of the peak at $2\theta = 39.86°$ in the obtained diffraction pattern. The results are shown in the following Tables 1 and 2.

[CO and HC Oxidation Performance]

The CO and HC oxidation performance was evaluated for the exhaust gas purification catalyst after the thermal aging treatment. Specifically, a catalyst was installed at a position 100 cm behind the exhaust port of a 3.0 L turbo diesel engine, and evaluation was performed per the NEDC, and the CO and HC oxidation rates (%) were each measured. The temperature of the exhaust gas was in the range of 25 to 380°C. Further, with respect to the exhaust gas purification catalysts containing the Al-P composite oxides of the Examples, the CO and HC oxidation performance per mass unit $PO_4$ of each were calculated according to the following formulae. This means that the higher the value, the higher the effect of improving the exhaust gas purification performance by $PO_4$.

[Mathematical Formulae 1]

CO oxidation performance per mass unit of PO$_4$ (%·L/g) = CO oxidation rate (%) / PO$_4$ amount per liter of catalyst (g/L)

HC oxidation performance per mass unit of PO$_4$ (%·L/g) = HC oxidation rate (%) / PO$_4$ amount per liter of catalyst (g/L)

The results are shown in the following Tables 1 and 2.

[Table 1]

| | Powder | mass% | | | | | BET specific surface area (m²/g) | Amount of desorbed NH₃ (μmol/g) | Catalyst | Crystalline diameter (nm) | CO oxidation rate (%) | HC oxidation rate (%) | Purification performance per mass unit of PO₄ | |
|---|---|---|---|---|---|---|---|---|---|---|---|---|---|---|
| | | Al₂O₃ | ZrO₂ | PO₄ | SiO₂ | TiO₂ | | | | | | | CO oxidation performance (% · L/g) | HC oxidation performance (% · L/g) |
| Example 1 | a | 90 | 5 | 5 | 0 | 0 | 203 | 49.5 | A | 12.4 | 62.0 | 71.7 | 20.7 | 23.9 |
| Example 2 | b | 87.5 | 5 | 7.5 | 0 | 0 | 216 | 53.0 | B | 11.5 | 68.5 | 74.4 | 15.2 | 16.5 |
| Example 3 | c | 85 | 5 | 10 | 0 | 0 | 242 | 62.7 | C | 11.8 | 68.0 | 72.8 | 11.3 | 12.1 |
| Comparative Example 1 | d | 80 | 5 | 15 | 0 | 0 | 119 | 40.3 | D | 13.9 | 50.0 | 50.0 | - | - |
| Comparative Example 2 | e | 92.5 | 5 | 2.5 | 0 | 0 | 163 | 41.1 | E | 13.1 | 57.0 | 64.9 | - | - |
| Comparative Example 3 | f | 95 | 5 | 0 | 0 | 0 | 138 | 30.7 | F | 13.9 | 47.3 | 61.0 | - | - |
| Example 4 | g | 95 | 0 | 5 | 0 | 0 | 171 | 45.2 | G | 12.8 | 57.9 | 67.7 | 19.3 | 22.6 |
| Example 5 | h | 92.5 | 2.5 | 5 | 0 | 0 | 191 | 47.3 | H | 12.7 | 60.3 | 70.4 | 20.1 | 23.5 |
| Comparative Example 4 | i | 87.5 | 7.5 | 5 | 0 | 0 | 167 | 42.9 | I | 13.1 | 54.4 | 64.8 | - | - |
| Comparative Example 5 | j | 85 | 10 | 5 | 0 | 0 | 145 | 40.5 | J | 13.4 | 46.8 | 60.7 | - | - |
| Comparative Example 6 | k | 100 | 0 | 0 | 0 | 0 | 118 | 33.0 | K | 13.8 | 47.6 | 62.0 | - | - |
| Comparative Example 7 | l | 90 | 5 | 0 | 2.5 | 2.5 | 166 | 35.0 | L | 14 | 54.8 | 63.0 | | |

[Table 2]

| | Catalyst | parts by mass | | | | | Crystalline diameter (nm) | CO oxidation rate (%) | HC oxidation rate (%) | Purification performance per mass unit of $PO_4$ | |
|---|---|---|---|---|---|---|---|---|---|---|---|
| | | Pt | Pd | Powder b | Zeolite | $La_2O_3$ | | | | CO oxidation performance (% · L/g) | HC oxidation performance (% · L/g) |
| Example 2-1 | B1 | 1.20 | 0.80 | 60 | 40 | 2 | 11.1 | 69.1 | 74.1 | 15.4 | 16.5 |
| Example 2 | B | 1.33 | 0.67 | 60 | 40 | 2 | 11.5 | 68.5 | 74.4 | 15.2 | 16.5 |
| Example 2-2 | B2 | 1.50 | 0.50 | 60 | 40 | 2 | 12.0 | 66.5 | 74.7 | 14.8 | 16.6 |
| Example 2-3 | B3 | 1.71 | 0.29 | 60 | 40 | 2 | 12.9 | 61.0 | 75.7 | 13.6 | 16.8 |

The results of Table 1 indicate that the Al-P composite oxide according to the invention has a large BET specific surface area and a large amount of desorbed $NH_3$ because the contents of aluminum oxide, zirconium oxide, and phosphorus oxide are within specific ranges.

In addition, the results of Table 1 indicate that in the exhaust gas purification catalyst according to the invention, the crystalline diameter of the precious metal is small even after high temperature thermal aging, and the CO and HC oxidation rates at a low temperature range are significantly improved by the incorporation of the above-mentioned Al-P composite oxide.

The present application is based on Japanese Patent Application No. 2020-208473 filed on December 16, 2020, the disclosed content of which is incorporated by reference in its entirety.

**Claims**

1. An Al-P composite oxide, comprising aluminum oxide and phosphorus oxide, wherein
   with respect to the total mass of the Al-P composite oxide, an aluminum oxide content is 79 mass% or more and 97 mass% or less in terms of $Al_2O_3$, a zirconium oxide content is 0 mass% or more than 0 mass% and 7 mass% or less in terms of $ZrO_2$, and a phosphorus oxide content is 3 mass% or more and 14 mass% or less in terms of $PO_4$.

2. The Al-P composite oxide according to claim 1, wherein with respect to the total mass of the Al-P composite oxide, an aluminum oxide content is 85 mass% or more and 95 mass% or less in terms of $Al_2O_3$, a zirconium oxide content is 0 mass% or more than 0 mass% and 5 mass% or less in terms of $ZrO_2$, and a phosphorus oxide content is 5 mass% or more and 10 mass% or less in terms of $PO_4$.

3. The Al-P composite oxide according to claim 1 or 2, wherein an amount of desorbed $NH_3$ in an ammonia TPD measurement is 43 to 150 $\mu$moL/g per gram of the Al-P composite oxide.

4. The Al-P composite oxide according to any one of claims 1 to 3, wherein a BET specific surface area is 170 to 300 m2/g.

5. An exhaust gas purification catalyst, comprising the Al-P composite oxide according to any one of claims 1 to 4 and a precious metal, both of which are supported on a refractory three-dimensional structure.

6. The exhaust gas purification catalyst according to claim 5, wherein

   the precious metal contains platinum and palladium, and
   a mass ratio of the platinum to the palladium is Pt : Pd = 1 : 0.1 to 1 in terms of metal.

7. The exhaust gas purification catalyst according to claim 6, wherein a crystallite diameter of the precious metal in XRD measurement using a CuK$\alpha$ ray is 1 to 13 nm.

8. A method for purifying exhaust gas, comprising bringing the exhaust gas purification catalyst according to any one of claims 5 to 7 into contact with exhaust gas discharged from an internal combustion engine.

## INTERNATIONAL SEARCH REPORT

| International application No. |
|---|
| **PCT/JP2021/044868** |

### A. CLASSIFICATION OF SUBJECT MATTER

***B01J 29/74***(2006.01)i; ***B01D 53/94***(2006.01)i; ***B01J 27/16***(2006.01)i; ***B01J 35/10***(2006.01)i; ***F01N 3/10***(2006.01)i
FI:  B01J29/74 A; B01J27/16; B01J35/10 301J; B01D53/94 222; B01D53/94 280; B01D53/94 245; F01N3/10 A; B01D53/94 ZAB

According to International Patent Classification (IPC) or to both national classification and IPC

### B. FIELDS SEARCHED

Minimum documentation searched (classification system followed by classification symbols)

B01D53/73; B01D53/86-53/90; B01D53/94; B01D53/96; B01J21/00-38/74; C01B25/36; F01N3/00; F01N3/02; F01N3/04-3/38; F01N9/00-11/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 06-171915 A (CORNING INC) 21 June 1994 (1994-06-21)<br>paragraphs [0001]-[0002], [0013], [0032], [0044], [0047]-[0055] | 1-8 |
| X | JP 2010-221117 A (JX NIPPON OIL & ENERGY CORP) 07 October 2010 (2010-10-07)<br>paragraphs [0022], [0025] | 1-2 |
| X | JP 2002-028491 A (CATALYSTS & CHEM IND CO LTD) 29 January 2002 (2002-01-29)<br>paragraphs [0032]-[0035] | 1 |
| A | JP 2017-023920 A (TOYOTA MOTOR CORP) 02 February 2017 (2017-02-02)<br>entire text | 1-8 |
| A | WO 2009/142180 A1 (MITSUI MINING & SMELTING CO., LTD.) 26 November 2009 (2009-11-26)<br>entire text | 1-8 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **01 February 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2021/044868**

| Patent document cited in search report | | | Publication date (day/month/year) | Patent family member(s) | | | Publication date (day/month/year) |
|---|---|---|---|---|---|---|---|
| JP | 06-171915 | A | 21 June 1994 | US column 1, lines 6-45, column 3, lines 33-37, column 6, lines 39-41, column 7, lines 56-61, column 8, line 6 to column 9, line 18 | 5260241 | A | |
| | | | | EP | 586820 | A1 | |
| | | | | DE | 69321061 | C | |
| | | | | KR | 10-1994-0003853 | A | |
| JP | 2010-221117 | A | 07 October 2010 | US paragraphs [0123]-[0126], [0133]-[0136] | 2012/0018352 | A1 | |
| | | | | WO | 2010/109823 | A1 | |
| | | | | EP | 2412438 | A1 | |
| | | | | SG | 174897 | A | |
| | | | | CN | 102361692 | A | |
| | | | | DK | 2412438 | T | |
| JP | 2002-028491 | A | 29 January 2002 | (Family: none) | | | |
| JP | 2017-023920 | A | 02 February 2017 | US the whole document | 2017/0014804 | A1 | |
| | | | | CN | 106345500 | A | |
| WO | 2009/142180 | A1 | 26 November 2009 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004167354 A

- JP 2020208473 A